# EUROPEAN PATENT APPLICATION

(11) **EP 1 180 895 A1**
(43) Date of publication of application: **20.02.2002**
(21) Application number: 01302476.5
(22) Date of filing: 05.03.2001
(51) Int. Cl.: H04M 17/00

(54) **Method for providing alternative prepaid billing service**

(30) Priority: 18.08.2000 US 641669
(71) Applicant: Lucent Technologies Inc., Murray Hill, New Jersey 07974-0636 (US)
(72) Inventor: Goss, Stephen C., Wheaton, Illinois 60187 (US); Sand, Paul R., Woodridge, Illinois 60517 (US); Sands, Philip Michael, Champaign, Illinois 61820 (US)
(74) Representative: Watts, Christopher Malcolm Kelway, Dr.

(57) **Abstract**

The present invention provides a method for providing alternate billing service to a user whose service is provided on a prepaid basis. The prepaid service includes a first billing source to pay for the service. An alternate billing source is also provided. The alternate billing source, which is different from the first billing source, is used upon the existence of a predetermined condition. Examples of predetermined conditions include the account balance of the first billing source dropping to zero, communications with predetermined telephone numbers, the user being in a predetermined geographic area, the time of day, or the day of the week.

## Description

### Field of the Invention

The present invention relates generally to communication systems, and more particularly to a method for providing alternate billing service for use of a device whose service is provided on a prepaid basis.

### Background of the Invention

Prepaid billing has become popular in recent years. Prepaid billing refers to providing service to users of devices who pay in advance into an account that is debited when the service is used.

One example of prepaid billing is a prepaid cellular phone. Prepaid cellular phones are cellular phones that are purchased with a predetermined number of minutes allocated. When the predetermined number of minutes are depleted, the cellular phone typically ceases operation. The user then has to purchase additional minutes to continue using the cellular phone.

Another type of prepaid billing service is a prepaid calling card for long-distance telephone service. Such calling cards are purchased and provide the user of the card with a predetermined number of minutes that can be used to make long-distance phone calls. Prepaid calling can be cost-effective even for local toll calls.

One problem with prepaid billing service is that once the number of minutes are used, the prepaid cellular phone or prepaid calling card is no longer usable until more minutes are added. This can be a substantial hardship for those who need service prior to the step of adding additional minutes.

For example, many people purchase cellular phones with prepaid minutes for emergency use. One such case is a parent who purchases a cellular phone for her child to use in the case of an emergency. If the prepaid minutes are consumed prior to an emergency situation, an emergency can occur and leave the child with no cellular service.

Another problem occurs when using prepaid calling service. A parent may provide a prepaid cellular phone to her child for use during emergencies. The parent may want to provide this phone for emergencies, but not for normal calls and conversations. However, currently the account is debited for any calls made to or from the prepaid cellular phone. Therefore, a need exists for a mechanism that allows a prepaid account not to be charged when the phone billed on the prepaid account calls or receives calls from a predetermined phone number.

Therefore, a need exists for a method for allowing a phone or other device that is utilizing prepaid minutes to continue to operate after the prepaid minutes have expired. There is also a need to allow a prepaid device to access predetermined numbers without using up minutes of prepaid service.

### Summary of the Invention

It is an object of the present invention to provide a method for permitting a prepaid telephone or other device with no available credit to still operate in certain conditions.

The present invention provides a method for providing alternate billing service for use of a device whose service is provided on a prepaid basis. A phone, calling card, or other device is registered for prepaid service. The prepaid service comprises a first billing source to pay for the service. This can be a prepaid cellular service or the like. An alternate billing source different from the first billing source is also provided. The alternate billing source is billed for usage of the prepaid device upon the existence of a predetermined condition. The alternate billing source is charged for calls placed to and/or from the prepaid device when the predetermined condition exists.

The billing sources can be a credit card, a debit card, a prepaid phone card, a telephone account, an account set up by the user, or any other source that allows for billing for services provided.

The predetermined condition is preferably an account balance of the first billing source dropping to or below a predetermined value, such as when the account balance falls to zero. The predetermined condition may alternately be the calling of a predetermined phone number. For example, a list of predetermined phone numbers can be provided to a service provider, and when the device that is utilizing the prepaid service calls any of these telephone numbers, the prepaid balance is not lowered, but preferably the called number is charged. This is similar to collect calls, which is a method by which a caller may call a number that causes the call to be billed to the called party. In a similar manner, the present invention allows calls to be billed to a predetermined phone number when a call is made to or from a phone number that is in a predetermined list.

The predetermined condition can alternately be the time of day or the day of the week. For example, a prepaid calling card can be provided by a business to an employee. The prepaid service provides a first billing source to be charged during normal business hours, and an alternate billing source to be charged during nonbusiness hours for personal calls. In this manner, business calls placed are charged to the business, while personal calls made outside of normal business hours are charged to the personal account of the user. This embodiment makes billing and reimbursement much simpler than current methods, in which an employee must fill out expense reports, and itemize and separate out calls made for work purposes from calls made for personal reasons.

Additionally, the present invention provides a method for providing alternate prepaid billing service for cellular subscribers when calls are made from within their home region. When they roam to a different geographical location that is outside their predetermined geographical area, the alternate billing source is used to bill the call. Furthermore, call restrictions would trigger the alternate prepaid billing service when calls are placed from a phone utilizing a prepaid service to numbers within a given restricted area. When calls are placed outside the restricted area, for example, placing international calls, then some other billing source would be used to bill the call.

Further, the present invention provides a method for providing alternate prepaid billing service where a user enters an identification number to use one of the two billing sources. When the identification number is not entered, the other billing source is billed for the call. This embodiment is very useful in a business setting.

Thus, the present invention provides an improved method for providing alternate prepaid billing service.

### Brief Description of the Drawings

FIG. 1 depicts a communication system in accordance with the preferred embodiment of the present invention.
FIG. 2 depicts a flowchart of a method for providing alternate billing service in accordance with the preferred embodiment of the present invention.
FIG. 3 depicts a flowchart of a method for providing alternate billing service in accordance with an alternate embodiment of the present invention.

### Description of the Preferred Embodiment(s)

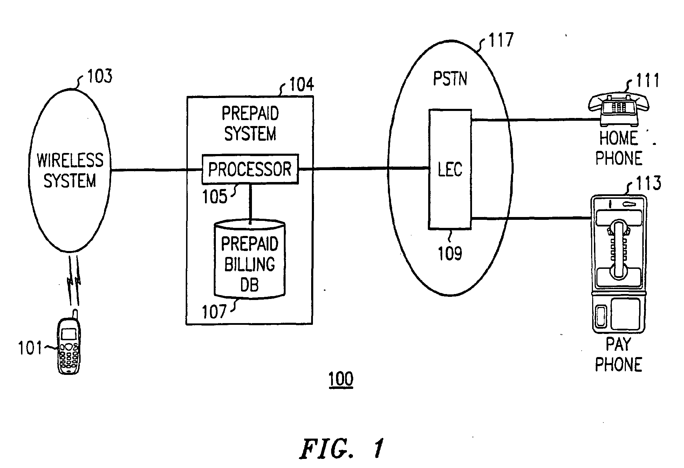

FIG. 1 depicts a communication system 100 in accordance with the preferred embodiment of the present invention. Communication system 100 includes a wireless system 103, a prepaid system 104, and a landline system 117. Wireless system 103 is preferably a cellular communication system, but could alternately be a paging system, a wireless internet system, or any other wireless system that provides wireless access to a wireless device.

Wireless device 101 is in communication with wireless system 103. Wireless device 101 is preferably a cellular phone, but can alternately be a pager, a wireless internet access device, or any other wireless device that communicates over Radio Frequencies (RF) with wireless system 103.

Landline system 117 includes a Local Exchange Carrier (LEC) 109. Coupled to LEC 109 are a wireline telephone 111 and a pay phone 113. It should be understood that a variety of devices can be coupled to landline system 117 via LEC 109, but only two are depicted for clarity.

Prepaid system 104 includes prepaid billing database 107 and processor 105. Prepaid billing database 107 includes information pertaining to a customer's prepaid billing accounts. Prepaid billing database 107 includes for each prepaid account the identity of a first billing source and an alternate billing source. The first billing source and alternate billing source can be a credit card, a debit card, a prepaid phone card, a prepaid cellular card, a telephone account, or any other account that allows for billing.

The present invention as depicted in FIG. 1 can be utilized by wireless device 101, pay phone 113, or landline telephone 111. As an example of use by wireless device 101, wireless device 101 is registered to a cellular system as a prepaid cellular phone. Wireless device 101 provides a first billing source that is stored in prepaid billing database 107. The first billing source is preferably a prepaid cellular account. Wireless device 101 also provides an alternate billing source that is stored in prepaid billing database 107. The alternate billing source is preferably a credit card account.

Predetermined conditions are established for wireless device 101. The predetermined condition preferably relates to the account balance of the prepaid cellular service. For example, calls placed to or from wireless device 101 are usually billed to the first billing source. When the predetermined condition occurs, however, preferably when the account balance in the prepaid cellular account drops below a predetermined level, the alternate billing source is charged. The predetermined level at which service is switched to the alternate billing source is when the account balance on the prepaid cellular service drops to zero. This provides an improvement over the prior art by allowing a seamless, automatic transition of billing during an inprogress phone call to occur. This allows the transition in billing to occur without further input from the user and without disrupting the call in progress. In current systems, the current call would be terminated upon the account balance dropping to zero, and a second call would then have to be placed. The present invention provides for increased service in such situations, especially in situations where it would not be advantageous for the current call to be terminated, such as during an emergency.

Wireline telephone 111 can also utilize the present invention. In this embodiment, a user obtains a prepaid phone card. This card includes a predefined number of minutes, and can have minutes added to the card by paying money to the issuer of the card. An alternate billing source can be stored in prepaid billing database 107 for this card. The alternate billing source can be a debit card, a credit card, a second prepaid phone card, or any other source that allows for billing for services rendered.

In this embodiment, wireline telephone 111 places a call via landline system 117 through LEC 109 using the first billing source. LEC 109 communicates with processor 105 located at prepaid system 104. Processor 105 obtains information regarding the first billing source from prepaid billing database 107. LEC 109 then initiates the processing to connect the call.

Upon the occurrence of a predetermined condition, processor 105 accesses prepaid billing database 107 and obtains information relating to an alternate billing source. The predetermined condition can be the time of day, the day of the week, the calling of a predefined phone number, the account balance of the first billing source dropping to a predefined level, wireless users roaming to a different geographical region, calls made to places outside a restricted geographical area, or any other suitable condition. Upon occurrence of a predetermined condition, processor 105 accesses prepaid billing database 107 and begins charging the alternate billing source.

It should be understood that in a call involving wireline phone 111 and wireless device 101, the landline phone charge and the wireless phone charge can be processed in the same database. Further, the landline bill can be charged to the first billing source and the bill for wireless device 101 could be charged to the alternate billing source.

In a further embodiment of the present invention, pay phone 113 can be utilized. In this embodiment, a user obtains a prepaid calling card. The user also provides an alternate billing source, as well as the predetermined condition upon which the alternate billing source should be charged instead of the first billing source. In this embodiment, the first billing source can be a prepaid calling card. The alternate billing source is preferably a home wireline account, but can alternately be a wireless account or any other account that allows for billing of services, such as utility companies or the like.

In this embodiment, the user can set the predetermined condition to be the calling of any number within a predetermined set of telephone numbers. For example, the user can include in the predetermined set of telephone numbers his own home phone number, as well as his cellular number and his work number. In this embodiment, any calls made to any of those numbers will be charged to the alternate billing source, the home wireline bill. This allows the user to save the minutes on the prepaid card for calls placed to other numbers, and not to his own phones. This also allows the user to save the minutes for systems that do not accommodate automatic alternate billing service.

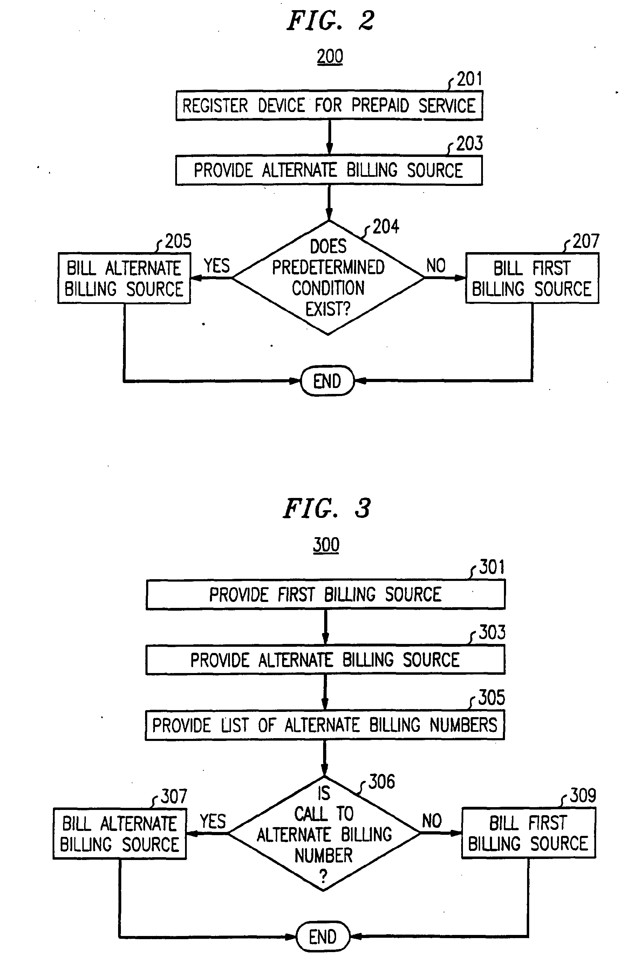

FIG. 2 depicts a flowchart 200 of a method for providing alternate billing service in accordance with the preferred embodiment of the present invention. In accordance with FIG. 2, a telephone account includes service that is provided on a prepaid basis.

The telephone account is registered (201) for prepaid telephone service. The prepaid telephone service includes a first billing source to pay for the telephone service. The first billing source is preferably a prepaid calling card. The first billing source can alternately be a prepaid cellular service, a credit card, a debit card, a telephone calling card, a telephone account, or any other source that provides billing capabilities.

An alternate billing source, different than the first billing source, is provided (203). The alternate billing source is preferably a telephone number account, such as the home telephone number of the person registering for the service. The alternate billing source can alternately be a prepaid phone card, a credit card, a debit card, or any other account that provides billing service.

The system then determines (204) if the predetermined condition exists. The predetermined condition preferably comprises the account balance of the first billing source falling to a predetermined value, such as zero. Alternately, the predetermined condition is a call involving a predetermined phone number. This predetermined phone number can be a landline number, a cellular number, or the number of a computer address, such as an internet service provider. The predetermined phone number is preferably selected from a list of phone numbers provided by the person who registers for the prepaid service.

The predetermined condition can alternately be the time of day. For example, the time of day can be late at night. This provides a parent the ability to pay for any late-night calls made by a child, such as commonly occurs during emergency situations. The time of day can alternately correspond to business hours. For example, prepaid service can be provided to an employee. The company provides the first billing source and the employee provides the alternate billing source. In this manner, calls placed outside normal business hours, which is the predetermined condition, are charged to the alternate billing source provided by the employee. Calls made during normal business hours are charged to the first billing source associated with the company. In this manner, the time-consuming and inefficient method of an employee being reimbursed by an employer is eliminated, thereby providing for increased efficiency and productivity.

Similarly, the predetermined condition can be the day of the week. In this embodiment, the first billing source is charged for calls made during the normal business week, such as Monday through Friday, while the alternate billing source is charged for calls made on Saturday or Sunday. It should be understood that the days of the week that comprise the predetermined condition can vary from user to user based upon needs.

The predetermined condition can alternately be the geographic location of the user. In this embodiment, when the user is within a predetermined geographic area, the first billing source is billed for the call. When the user is not within the predetermined geographic area, the alternate billing source is billed for the subsequent call. For example, calls made within the user's home wireless system would be charged to the first billing source but calls made when roaming to a visited wireless system would be charged to the alternate billing source.

The predetermined condition can also apply to devices that restrict calls to a given region. In this embodiment, when the user originates calls to other places within a given region the first billing source is used. When calls are made to places outside the restricted area, not in the predetermined restricted geographical area, the alternate billing source is billed. For example, calls made within the country can be charged to the first billing source, while calls placed to phones outside of the country can be charged to the alternate billing source.

The present invention can also be utilized by having the predetermined condition be the location or type of number called. For example, the predetermined condition can be the calling of a number whose area code is not within a predefined group. In this embodiment, a call made to a phone having an area code within the predefined group is charged to the first billing source, while calls made to phones having an area code other than one in the predefined group are charged to the alternate billing source. This allows the person paying for the first billing source to limit the calls that they will pay for.

If the predetermined condition exists when a call is placed to or from the telephone provided with prepaid service or during the duration of the call, the system bills (205) the alternate billing source. In the embodiment where the alternate billing source is the home number, the system bills the alternate billing source. In this embodiment, the system receives the call request from the user, or can receive a call request directed to the user. The system then accesses a database to determine if this user is signed up for prepaid alternate billing service. If the user is signed up for prepaid alternate billing service, the system checks to see if the predetermined condition exists.

If the predetermined condition does not exist, either at the time of the call or during the call, the system bills (207) the first billing source.

The billing of the alternate billing source may occur during the duration of a call. For example, if the account balance on the prepaid service goes to zero during the call, the billing will automatically be switched to the alternate billing source. The user of the prepaid service is alerted that the billing has switched from the first billing source to the alternate billing source. This can be accomplished by playing an alert tone, a prerecorded message, by turning on a light on the device that user is using, or in any other manner that alerts the user that the billing source has changed from the first billing source to the alternate billing source. This alert can also be generated when the call is charged to the alternate billing source from the beginning of the call.

The system can charge the user of the prepaid service for this change from the first billing source to the alternate billing source. For example, a surcharge could be assessed to the alternate billing source anytime the alternate billing source is utilized for a call. Alternately, the first billing source or the alternate billing source can be charged a surcharge any time the alternate billing source is used. For example, if the predetermined condition is that the account balance in the prepaid service reaches zero, the system can switch the user to the alternate billing service when the prepaid account reaches the $1 mark, and then charge the user $1 on the prepaid service, thereby making the account balance go to zero.

FIG. 3 depicts a flowchart 300 of a method for providing alternate billing service in accordance with an alternate embodiment of the present invention. In this embodiment, normal calls are charged on a prepaid basis against a prepaid cellular account or calling card account. Calls placed to or from a phone number that is on a predetermined list are not charged against the prepaid account, but are charged to an alternate billing source. The alternate billing source can be the person called, a credit card, or other suitable billing sources.

In this embodiment, a first billing source is provided (301) for calls made to or from the cellular phone. The first billing source is preferably a prepaid calling card, but can alternately be a prepaid cellular service, a credit card, a debit card, a telephone calling card, a telephone account, or any other source that provides billing capabilities.

An alternate billing source different from the first billing source is provided (303). The alternate billing source is preferably a telephone number account, such as the home telephone number of the person registering for the service. The alternate billing source can alternately be a prepaid phone card, a credit card, a debit card, or any other account that provides billing service.

A list of alternate billing telephone numbers is provided (305). The list of alternate billing telephone numbers is a list of numbers that can be called without incurring charges to the first billing source. The alternate billing telephone numbers are numbers that can be called during a predetermined condition, such as an emergency. These numbers can include emergency services personnel, home numbers, work numbers, or any other phone numbers that might be dialed during an emergency situation.

The alternate billing telephone numbers can be non-business phone numbers. For example, the list of alternate billing numbers can include any phone number that is not called by an employee during the scope of his employment. In this embodiment, calls to these non-business numbers are charged to an alternate billing source, such as the credit card of the employee. Other calls, which are business-related, are charged to the first billing source, such as a prepaid calling card provided by the employer.

The system determines (306) if the call is to or from an alternate billing number. The same processing can occur for a call received from an alternate billing number. The system determines that a call is being requested from the prepaid user or coming in to the prepaid user. The system then checks a database to determine if this user is signed up for prepaid alternate billing service. If the user is signed up for prepaid alternate billing service, the system then determines if the calling phone or the phone being called is in the alternate billing numbers list. If so, the system knows that this is a call to or from an alternate billing number.

If the call is to or from an alternate billing number, the system bills (307) the alternate billing source. The step of billing the alternate billing source preferably comprises billing a credit card, but alternately can comprise billing a telephone number, always billing the alternate source when calls are made between the cellular phone and a phone number included in the list of alternate billing telephone numbers, billing the alternate source only when the account balance of the first billing source falls to zero, billing the alternate source during predetermined times of day, billing the alternate source on predetermined days of the week, billing the alternate source when wireless users roam outside their home system, or billing the alternate source when calls are made to places outside a given restricted region.

If the number calling or called is not an alternate billing number, the system bills (309) the first billing source.

Thus, the present invention provides a method that solves a problem associated with the prior art. The present invention provides a method for providing alternate billing service to a user that is provided service on a prepaid basis. By providing an alternate billing source, the user can place and receive phone calls after the account balance on the first billing source has been depleted. This is especially useful in situations in which an emergency call is being placed. This emergency call can be to an emergency service provider, such as the police, or to a home or business number of an acquaintance who can assist in the situation.

The present invention also provides an efficient and effective method of providing alternate billing service in situations where prepaid service is provided to a business user. The first prepaid billing source is provided by the employer. When the employee makes calls that are not work-related, the calls are charged to an alternate billing source. This greatly simplifies expense reporting, and also potentially decreases fraud in the work place.

The present invention can also be applied to traditional cellular accounts where an allotment of airtime minutes is provided for a set monthly fee. If a user uses more than the allotted minutes, a per-minute charge is added to the account. Under this invention, the allotted minutes can be considered the first source of payment. When the predetermined condition occurs, a second, alternate billing source is used, leaving the allotted minute balance untouched.

While this invention has been described in terms of certain examples thereof, it is not intended that it be limited to the above description, but rather only to the extent set forth in the claims that follow.

## Claims

1. A method for providing alternate billing service to a communication device whose service is provided on a prepaid basis, the method comprising the steps of:
billing a first billing source as prepaid service; and
ceasing billing of the first billing source and automatically billing an alternate billing source upon the occurrence of a predetermined condition, the alternate billing source being different than the first billing source.

2. A method for providing alternate billing service in accordance with claim 1, wherein the first billing source has an account balance, and wherein the predetermined condition comprises the account balance dropping to a predetermined value.

3. A method for providing alternate billing service in accordance with claim 2, wherein the predetermined value is zero.

4. A method for providing alternate billing service in accordance with claim 1, wherein the predetermined condition is the calling of a predetermined phone number.

5. A method for providing alternate billing service in accordance with claim 4, wherein the predetermined phone number is selected from a list of provided phone numbers.

6. A method for providing alternate billing service in accordance with claim 1, wherein the predetermined condition is the receiving of a call from a predetermined phone number.

7. A method for providing alternate billing service in accordance with claim 6, wherein the predetermined phone number is selected from a list of provided phone numbers.

8. A method for providing alternate billing service in accordance with claim 1, wherein the predetermined condition is the time of day.

9. A method for providing alternate billing service in accordance with claim 1, wherein the predetermined condition is the day of the week.

10. A method for providing alternate billing service in accordance with claim 1, wherein the step of ceasing billing of the first billing source and automatically billing the alternate billing source comprises charging a credit card.

11. A method for providing alternate billing service in accordance with claim 1, wherein the step of ceasing billing of the first billing source and automatically billing the alternate billing source comprises charging a telephone account.

12. A method for providing alternate billing service in accordance with claim 1, wherein the step of ceasing billing of the first billing source and automatically billing the alternate billing source comprises charging a debit card.

13. A method for providing alternate billing service in accordance with claim 1, wherein the step of ceasing billing of the first billing source and automatically billing the alternate billing source comprises charging a prepaid phone card.

14. A method for providing alternate billing service in accordance with claim 1, wherein the step of billing a first billing source comprises billing for prepaid cellular service.

15. A method for providing alternate billing service in accordance with claim 1, wherein the step of billing a first billing source comprises billing a prepaid calling card.

16. A method for providing prepaid service to a cellular phone in accordance with claim 1, wherein the step of automatically billing the alternate billing source comprises automatically billing the alternate billing source when the cellular phone places a call to a device located outside a predefined geographic location.

17. A method for providing prepaid service to a cellular phone, the method comprising the steps of:
providing a first billing source for calls made to or from the cellular phone;
providing an alternate billing source for the cellular phone, the alternate source being different from the first billing source;
providing a list of alternate billing telephone numbers; and
billing the alternate billing source when calls are made between the cellular phone and a phone number included in the list of alternate billing telephone numbers.

18. A method for providing prepaid service to a cellular phone in accordance with claim 17, wherein the step of billing the alternate billing source comprises billing a credit card.

19. A method for providing prepaid service to a cellular phone in accordance with claim 17, wherein the step of billing the alternate billing source comprises billing a telephone number.

20. A method for providing prepaid service to a cellular phone in accordance with claim 17, wherein the step of billing the alternate billing source comprises billing a debit card.

21. A method for providing prepaid service to a cellular phone in accordance with claim 17, wherein the step of billing the alternate billing source comprises billing a prepaid phone card.

22. A method for providing prepaid service to a cellular phone in accordance with claim 17, wherein the first billing source includes an account balance, and wherein the step of billing the alternate billing source comprises billing the alternate billing source when the account balance falls to zero.

23. A method for providing prepaid service to a cellular phone in accordance with claim 17, wherein the step of billing the alternate billing source comprises billing the alternate billing source during predetermined times of day.

24. A method for providing prepaid service to a cellular phone in accordance with claim 17, wherein the step of billing the alternate billing source comprises billing the alternate billing source during predetermined days of the week.

25. A method for providing prepaid service to a cellular phone in accordance with claim 17, wherein the step of billing the alternate billing source comprises billing the alternate billing source when the cellular phone is in a predetermined geographic region.

26. A method for providing prepaid service to a cellular phone in accordance with claim 17, wherein the step of billing the alternate billing source comprises billing the alternate billing source when an identification number is entered into the cellular phone.

27. A method for providing prepaid service to a cellular phone in accordance with claim 17, wherein the step of billing the alternate billing source comprises billing the alternate billing source when the cellular phone places a call to a device located outside a predefined geographic location.
